# EUROPÄISCHE PATENTSCHRIFT

(11) **EP 3 485 770 B1**
(45) Veröffentlichungstag und Bekanntmachung des Hinweises auf die Patenterteilung: **21.04.2021**
(21) Anmeldenummer: 18201233.6
(22) Anmeldetag: 18.10.2018
(51) Int. Cl.: A47J 31/18

(54) **GETRÄNKEAUTOMAT ZUR ZUBEREITUNG EINES TEEGETRÄNKES**
AUTOMATIC MACHINE FOR PREPARING A TEA BEVERAGE
DISTRIBUTEUR DE BOISSONS DESTINÉ À PRÉPARER UNE BOISSON À BASE DE THÉ

(30) Priorität: 16.11.2017 DE 102017126934
(43) Veröffentlichungstag der Anmeldung: 22.05.2019
(73) Patentinhaber: Miele & Cie. KG, 33332 Gütersloh (DE)
(72) Erfinder: Löckmann, Manuela, 33415 Verl (DE); Tembaak, Jutta, 49492 Westerkappeln (DE)

(56) Entgegenhaltungen:
- EP-A1- 3 078 309
- WO-A1-2017/042243
- Anonymous: "Amazon.com: DeLonghi BCO320T Combination Espresso and Drip Coffee- Black: Combination Coffee Espresso Machines: Kitchen & Dining", , 18. Oktober 2010 (2010-10-18), XP055576857, Gefunden im Internet: URL:https://www.amazon.com/dp/B00489QIVE/r ef=psdc_14163731_t1_B0009YDHPC#customerRev iews [gefunden am 2019-04-02] & Anonymous: "Amazon.com: DeLonghi BCO320T Combination Espresso and Drip Coffee- Black: Combination Coffee Espresso Machines: Kitchen & Dining", , 18. Oktober 2010 (2010-10-18), Seiten 1-1, XP055576859, Gefunden im Internet: URL:https://www.amazon.com/dp/B00489QIVE/r ef=psdc_14163731_t1_B0009YDHPC#customerRev iews [gefunden am 2019-04-02]

## Beschreibung

Die Erfindung betrifft einen Getränkebereiter, wie Kaffeevollautomat, umfassend ein Gehäuse und zumindest ein Strömungsleitungssystem, welches mindestens einen Wasser enthaltenden oder befüllbaren Wasserbehälter oder einen Wasseranschluss, wenigstens eine Pumpe zum Fördern des Wassers durch Leitungsabschnitte und Komponenten des Strömungsleitungssystems, mindestens eine Heizeinrichtung zum Erhitzen des Wassers, mindestens eine Ventilanordnung, eine Brühkammer zur Aufnahme einer Trockensubstanz, die dazu konfiguriert ist, mit heißem Wasser unter Druck durchströmt zu werden und wenigstens eine Entnahmeeinrichtung umfasst, und einer Steuereinrichtung zur Steuerung einer im Strömungsleitungssystem eingebundenen Pumpe, einer Heizeinrichtung und Ventilen zur Zubereitung eines ausgewählten Getränkes.

Bei der Zubereitung von Tee spielt die Wassertemperatur und die Ziehzeit oder Ziehdauer eine entscheidende Rolle für den Teegeschmack. Die einzelnen Teesorten benötigen dabei unterschiedlich hohe Wassertemperaturen beim Aufgießen sowie unterschiedlich lange Ziehzeiten.

So sollte beispielsweise schwarzer Tee mit kochendem Wasser aufgebrüht werden. Die ideale Wassertemperatur liegt bei ca. 90 °C bis 95 °C, wobei die Ziehzeit zwischen 3 und 5 Minuten beträgt. Bei einer Ziehzeit von bis zu 3 Minuten wirkt der Tee eher anregend, während er ab einer Ziehzeit von 5 Minuten nicht mehr anregt. Schwarzer Tee entwickelt bei Ziehzeiten von mehr als 5 Minuten zudem einen bitteren Geschmack.

Bei der Zubereitung von grünem Tee sollte das Wasser nach dem Aufkochen, wie auch beim Weißen Tee, zunächst etwa 3 Minuten abkühlen. Denn bei diesen Teesorten gehen die zarten und blumigen Nuancen durch zu hohe Temperaturen des Aufbrühwassers verloren und der Geschmack verändert sich negativ. Die Ziehzeit von grünem Tee sollte nicht mehr als 3 bis 4 Minuten betragen. Grüntees werden üblicherweise mit 70 °C bis 85 °C heißem Wasser aufgegossen und können 2 bis 3 Aufgüsse vertragen, wobei sich die Intensität des Geschmacks von Aufguss zu Aufguss halbiert.

Gelber Tee wird mit einer Wassertemperatur von 75 °C aufgegossen und zwischen 1 bis 3 Minuten ziehen gelassen. Ein gelber Tee ist eigentlich ein weißer Tee, der nach der Ernte nicht sofort weiterverarbeitet wurde. Die Blattspitzen müssen nach der Ernte ruhen. Dadurch fermentieren die Teeblätter leicht, wodurch die gelbliche Farbe entsteht.

Die Ziehzeit von Kräutertee liegt hingegen je nach Sorte zwischen 5 bis 8 Minuten. Kräutertee wird meist mit sprudelnd kochendem Wasser aufgegossen. Die ideale Wassertemperatur zum Aufgießen liegt hier bei etwa 95 °C.

Für die Herstellung eines Tees als Aufgussgetränk sind mittlerweile Getränkeautomaten erhältlich, die zum Teil auch die unterschiedlichen Anforderungen an die Ziehzeit und die Brühtemperatur in komfortabler Weise erfüllen.

Die US 8 225 708 B2 beschreibt zum Beispiel einen Getränkeautomaten zum automatischen Zubereiten eines Teegetränks. Hierzu wird Tee als Trockensubstanz in eine Brüheinheit eingebracht und anschließend mit erhitztem Wasser aufgebrüht. Das Getränk wird anschließend aus der Brüheinheit in ein Trinkgefäß gegeben. Die Wassertemperatur zum Aufbrühen ist bei dieser Lösung indirekt vom Benutzer einstellbar, in dem dieser die aufzubrühende Teesorte vorgibt, also am Getränkeautomaten auswählt. Ferner erfolgt die Steuerung der Wassertemperatur mit Hilfe eines Durchlauferhitzers, so dass während der Zubereitung die Wassertemperatur auch verändert werden kann. Folglich offenbart das Dokument eine Lösung, bei der die Anfangstemperatur höher ist, als die Endtemperatur.

Auch die Dokumente EP 1 570 774 A2 und die US 6 612 224 B2 beschreiben jeweils einen Getränkebereiter zur Zubereitung eines Teegetränks.

Neben diesen Getränkeautomaten sind auch Lösungen bekannt, die für die Zubereitung von Kaffeegetränken geeignet sind. Die Herstellung eines Kaffeegetränkes in einem Getränkeautomaten erfordert lediglich einen vereinfachten Brühvorgang, bei dem erhitztes beziehungsweise kochendes Wasser in der Brüheinheit mit dem Kaffeepulver zusammengeführt wird. Nach dem Aufbrühen des Kaffees kann das dadurch erzeugte Getränk unmittelbar über eine Ausgabeeinrichtung abgegeben werden. Besondere Ziehzeiten sind hierbei nicht erforderlich.

Bekannt sind auch Maschinen zur Bereitung von Espresso mit Wasser unter Druck, welche zusätzlich mit einem Fach für Kaffee und einem zugeordneten Auslass zur Bereitung von Filterkaffee ausgestattet sind.

Ein weiterer Aspekt moderner Getränkeautomaten ist es darüber hinaus, dass diese unabhängig von der Herstellungsart des erzeugten Aufgussgetränkes regelmäßig gereinigt werden müssen. Hierzu verfügen sie über geeignete Reinigungsprogramme, die manuell gestartet werden können oder automatisiert ablaufen, wozu eine elektronische Steuerungseinheit vorhanden ist, die mittels einer Software programmiert wird.

Die Tendenz zur Automatisierung der Herstellung von Aufgussgetränken, wie Tee oder Kaffee, hält unvermindert an. Wie zuvor bereits erläutert wurde, sind für die Zubereitung von Tee jedoch andere Vorgehensweisen erforderlich, als für die Zubereitung von Kaffee. Dies hat zur Folge, dass für jede der genannten Getränkearten separate Getränkeautomaten angeboten werden.

Der Erfindung liegt somit die Aufgabe zugrunde, einen Getränkeautomaten bereitzustellen, der in der Lage ist, wahlweise sowohl Kaffeegetränke, als auch Teegetränke in jeweils sehr guter Geschmacksqualität zu erzeugen.

Erfindungsgemäß wird unter anderem diese Aufgabe durch einen Getränkeautomaten zur wahlweisen Zubereitung eines Kaffeegetränks oder Teegetränks mit den Merkmalen des unabhängigen Patentanspruchs 1 gelöst. Vorteilhafte Ausgestaltungen und Weiterbildungen der Erfindung ergeben sich aus den nachfolgenden abhängigen Ansprüchen.

Die mit der Erfindung erreichbaren Vorteile bestehen insbesondere darin, dass hierbei ein Kaffeevollautomat Verwendung findet, in dem nunmehr auch die Zubereitung eines Teegetränkes möglich ist, wobei die Zubereitung zudem erfindungsgemäß zweistufig erfolgt und nicht mehr, wie es bisher üblich war, einstufig. Bei der einstufigen Herstellung wird der Tee nämlich lediglich mit dem auf die Brühtemperatur erhitzten Wasser überbrüht, so dass ein auf diese Weise erzeugtes Teegetränk anschließend unmittelbar über eine Ausgabeeinrichtung des Getränkeautomaten abgeführt wird. Hier geht die Erfindung vollkommen neue Wege, weil der mit heißem Wasser aufgebrühte Tee zunächst für eine definierte Verweildauer in der Brüheinheit belassen wird, so dass der Tee seine Geschmacksstoffe optimal entfalten kann. Erst im Anschluss daran wird der Tee entweder erneut in der Brüheinheit überbrüht oder in ein Trinkgefäß abgegeben und beispielsweise so lange mit erhitztem Wasser aufgefüllt, bis die gewünschte Konzentration erreicht ist. Auf diese Weise wird ein Teegetränk mit einem eigentlich als Kaffeevollautomat ausgeführten Getränkeautomaten erzeugt, das Teekenner beziehungsweise Genießer begeistert. Dies hat wiederum zur Folge, dass nicht für jedes Aufgussgetränk ein separater Getränkeautomat angeschafft werden muss.

Der Brühprozess kann erfindungsgemäß erstmals mit einem Getränkeautomaten dem ganz persönlichen Geschmack des Anwenders entsprechend angepasst werden beziehungsweise gemäß der aufzubrühenden Teesorte entsprechend variiert werden. Ein maßgeblicher Vorteil der Erfindung ist auch darin zu sehen, dass hier nicht ausschließlich die bisher bekannten Teekapseln zum Einsatz kommen, sondern beispielsweise auch loser Tee aufgebrüht werden kann.

Hierzu umfasst der Getränkebereiter eine weitere oder zusätzliche Aufnahmevorrichtung zur Aufnahme eines Faches zur Bevorratung einer weiteren, aufzubrühenden, pflanzlichen Substanz, wie Tee, welches mit heißem Wasser aufgebrüht werden kann, wobei der Auslass der besagten Aufnahmevorrichtung in eine separate Entnahmeeinrichtung mündet. Damit werden geschmacklich wechselseitige Einflüsse, die durch Anhaftungen an den Kammern verursacht werden, zuverlässig vermieden. Das wird besonders gut erreicht, wenn mit der erstgenannten Brühkammer nur Kaffeegetränke und mit der weiteren Aufnahmevorrichtung ausschließlich Teegetränke zubereitet werden.

Gemäß Patentanspruch 1 ist dem Auslass der weiteren Aufnahmevorrichtung ein Ventil zugeordnet, welches mittels der Steuereinrichtung den Auslass zur Entnahmeeinrichtung freigibt oder sperrt. Bei geschlossenem Ventil wird somit eine geschlossene Kammer bereitgestellt, in die das Fach mit der Teeportion eingelegt oder eingeschoben ist. Das eingelassene heiße Wasser kann in dieser Kammer eine vorbestimmte Zeit zur Bereitstellung der Ziehzeit verbleiben.

Dabei ist es insgesamt vorteilhaft, dass die weitere Aufnahmevorrichtung ein aus dieser herausnehmbaren Siebbehälter, wie Teesieb, umfasst. Zum Befüllen und zum Entleeren wird der Siebbehälter herausgenommen, wodurch sich eine bequeme und leichte Handhabung ergibt.

In einer bevorzugten Weiterbildung der vorgenannten Ausführung ist der Siebbehälter als schubladenartiger Einschub ausgebildet und die Aufnahmevorrichtung umfasst einen Schacht, der in einer Öffnung in einer Gehäusewand mündet. Damit ist eine bequeme Zugänglichkeit zum Siebbehälter und zur als Aufgusskammer fungierende Aufnahmevorrichtung sichergestellt.

Dabei ist es zweckmäßig, dass der Einschub ein Dichtmittel zum dichten Verschließen des Schachts umfasst. Durch den eingeschobenen Einschub, der mit dem zugeordneten Dichtmittel die Zugangsöffnung fluiddicht verschließt, wird im inneren des Schachts die Aufgusskammer bereitgestellt.

In einer weiteren, zweckmäßigen Weiterbildung ist die Zugangsöffnung zum Schacht in der Frontwand des Gerätes angeordnet. Besonders bei Einbaugeräten ist der Zugang zum Schacht möglich, ohne dass umständliche Gehäuseöffnungsmaßnahmen durchgeführt werden müssen.

In einer insgesamt vorteilhaften Ausführung des Getränkebereiters mit Auslassventil ist die Steuereinrichtung dazu eingerichtet und programmiert, das Einlassventil zu öffnen und wieder zu schließen, um eine erste Teilmenge erhitztes Wasser in die weitere Aufnahmevorrichtung einzulassen, wobei das Auslassventil während des besagten Einlassens des Wassers geschlossen ist. Die einzulassende Wassermenge kann alternativ durch das Aktivieren der Pumpe für eine vorbestimmte Zeit gesteuert werden.

In einer bevorzugten Weiterbildung ist die Steuereinrichtung dazu eingerichtet und programmiert, das Auslassventil nach einer vorbestimmten Zeit nach Beenden des Einlassens des Wassers zu öffnen, um das aufgebrühte Getränk oder die aufgebrühte Getränkeessenz aus der Entnahmeeinrichtung auszugeben. Auf diese Weise wird die vorbestimmte bzw. vom Benutzer ausgewählte Ziehzeit zum Brühen des Teegetränks bereitgestellt.

In einer vorteilhaften Weiterbildung ist die Steuereinrichtung ferner dazu eingerichtet und programmiert, das Einlassventil zu öffnen und die Pumpe zu aktivieren, um weiteres Wasser durch die Aufnahmevorrichtung zur Entnahmeeinrichtung zu fördern. Mit dem ersten Ablassen wird die Essenzflüssigkeit aus der Kammer in das Trinkgefäß abgelassen und mit der hier definierten Maßnahme wird anschließend heißes Wasser zur Verdünnung der Essenz in das Trinkgefäß eingelassen. Hierbei ist es auch möglich, die Wassertemperatur etwas abzusenken, weil der Ziehvorgang ja bereits beendet ist. Damit kann ein Teegetränk hergestellt werden, das unmittelbar nach dem Zubereiten eine Trinktemperatur deutlich unter 90°C aufweist und geschmacklich extrem gut gelungen ist.

In einer insgesamt vorteilhaften Ausführung der Erfindung umfasst der Getränkebereiter eine zusätzliche Heizeinrichtung, die in der zuführenden Leitung zum Einlass der Aufnahmevorrichtung zwischengeschaltet oder angeordnet ist. Damit kann schneller und zuverlässig so heißes Wasser in die Aufgusskammer eingelassen werden, wie es für einige Teesorten benötigt wird. Durch die Platzierung der zusätzlichen Heizeinrichtung in unmittelbarer Nähe zur Aufgusskammer wird die Abkühlung des Wassers in den Leitungen stark vermindert.

In einer weiteren, vorteilhaften Ausführung umfasst der Getränkebereiter eine weitere Entnahmeeinrichtung, die unter Umgehung der Aufnahmevorrichtung direkt mit dem Wassererhitzer fluidleitend verbunden ist. Damit wird eine separate Heißwasserdüse bereitgestellt. Dadurch, dass während des Verdünnens das Heißwasser nicht durch die Aufgusskammer gelangt, werden in dieser Zeit auch keine Geschmacksstoffe aus der bereits aufgebrauchten Teesubstanz gelöst. Die Ziehzeit wird somit exakt gemäß der Vorgabe eingehalten und Verfälschungen aufgrund des nachfolgenden Wasserzulaufs finden nicht statt.

Ein Ausführungsbeispiel der Erfindung ist in den Zeichnungen rein schematisch dargestellt und wird nachfolgend näher beschrieben. Es zeigen
- Fig. 1:: einen Getränkebereiter bzw. Kaffeevollautomaten;
- Fig. 2:: eine bevorzugte Ausführung des Strömungsleitungssystems in einer schematischen Ansicht;
- Fig. 3:: die zusätzliche Aufgusskammer im Detail und
- Fig. 4:: den Siebbehälter als schubladenartigen Einschub.

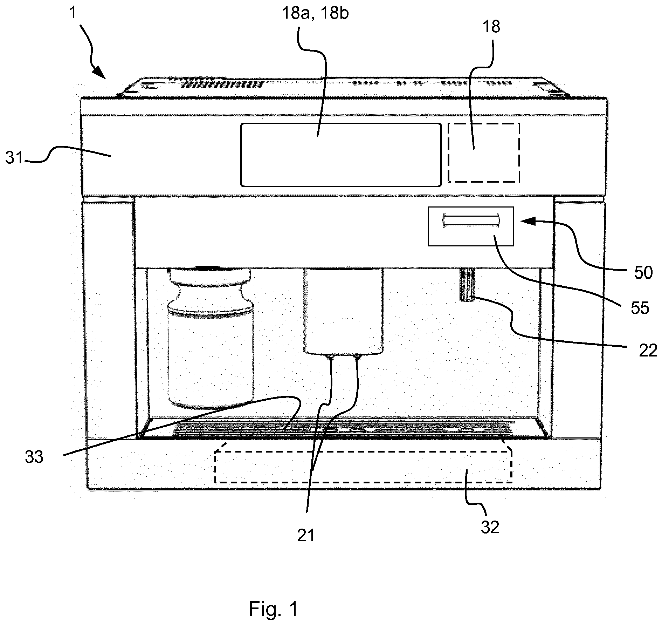

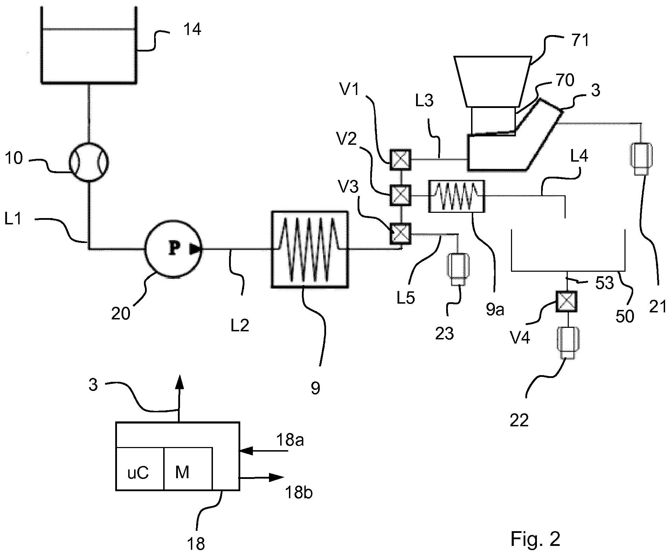

Die Fig.1 zeigt am Beispiel eines als Einbaugerät ausgebildeten Getränkeautomaten 1 die Möglichkeit, der Unterbringung des Strömungsleitungssystems 2 und der Vorratsbehälter zur Bevorratung der aufzugießenden Trockensubstanz, wie Kaffeebohnen. Im Frontbereich des Getränkeautomaten 1 verfügt dieser über einen Vorbau 31, in dem sichtgeschützt mehrere Entnahmeeinrichtungen 21, 22 untergebracht sind. Bei der Entnahmeeinrichtung 22 handelt es sich im vorliegenden Fall um eine Dampfdüse zur Abgabe heißen Wasserdampfes oder heißem Wasser, beispielsweise zur Verdünnung eines fertigen Kaffees oder zur Zubereitung eines Teegetränks. Die Entnahmeeinrichtung 21 stellt eine Ausgabeleitung oder Ausgabedüse zur Abgabe von Kaffeegetränken dar. Eine Brüheinheit mit einer Brühkammer 3 im Inneren des Gerätes 1 dient zur Zubereitung des Getränkes, wobei in die Brühkammer 3 das Kaffeepulver eingebracht und anschließend mit heißem Wasser durchflutet wird, sodass zur Ausgabeleitung und durch die Ausgabedüse 21 das fertige Kaffeegetränk ausgegeben wird. Bei dieser Ausführung ist die Ausgabedüsen 21 in der Höhe verschiebbar angeordnet, so dass sie der Höhe eines auf der Abstellfläche 33 abgestellten Trinkgefäßes angepasst werden kann, ohne dass bei der Abgabe des Getränkes ein Verspritzen erfolgt. Den oberen Abschluss der Abstellfläche 33 bildet ein Abtropfblech, das mit Öffnungen und Schlitzen versehen ist, um Flüssigkeitsreste in einen hierfür unterhalb des Abtropfbleches 33 vorhandenen Auffangbehälter 32 abzuführen. Das Gerät 1 umfasst gem. Fig. 1 und 2 ferner eine Steuereinrichtung 18 mit einem Mikrocontroller uC und einem dem Mikrocontroller zugeordneten Speicher M für Programme und Parameter, die dazu eingerichtet ist, die einzelnen Funktionsbaugruppen oder Aktoren, wie Pumpen 20, Ventile V1, V2, V3, V4 und Heizeinrichtung 9 und Mahlwerk 70, soweit vorhanden, zu steuern, wie es für die Zubereitung des jeweils ausgewählten Getränkes notwendig ist. Das Gerät 1 umfasst ferner einen Vorratsbehälter 71, in dem die Trockensubstanz bzw. Kaffeebohnen bevorratet werden können, die dann zur Getränkezubereitung portionsgerecht gemahlen und das Pulver der Brühkammer 3 zugeführt werden.

Fig. 2 zeigt einen vereinfachten Schaltplan eines Strömungsleitungssystems 2 innerhalb eines Getränkeautomaten 1. Von einer Wasserquelle 14, in diesem Beispiel ein Wassertank 14, wird das Strömungsleitungssystem 2 mit frischem Wasser versorgt. Das Strömungsleitungssystem 2 umfasst ferner zur Zubereitung der Getränke eine Heizeinrichtung 9 zur Erwärmung des Wassers 2a sowie mehrere Entnahmeeinrichtungen 21, 22, sowie Leitungsabschnitte L1, L2, L3, L4 zur Verbindung der einzelnen Komponenten miteinander, wobei die Dampfdüse 23 zur Ausgabe von Dampf und zur Ausgabe von heißem Wasser und/oder die Kaffeedüse 21 zur Ausgabe des zubereiteten Kaffeegetränkes vorgesehen ist. Zur selektiven Ansteuerung der Entnahmeeinrichtungen 21, 22 dienen die Ventile, beispielsweise Mehrwegventile, V1, V2 und V3, die den Entnahmeeinrichtungen 21 22, 23, bzw. der Brühkammer 3 in Strömungsrichtung betrachtet vorgeschaltet sind. Darüber hinaus umfasst das Strömungsleitungssystem 2 in der gezeigten Ausführung ein Messgerät zur Volumenstrommessung, das als Flowmeter 10 bezeichnet wird, aufweisen, das hilfreich ist, um eine genaue Menge frischen Wassers zu bestimmen, die für die Zubereitung eines Getränkes der Brühkammer 3 oder der Düsen 22, 23 zugeführt wird. Darüber hinaus lässt sich mit einer derartigen Messeinrichtung 10 auch die Anzahl der hergestellten Getränke bestimmen.

Eine Steuereinrichtung 18 mit einem Mikrocontroller uC und einer Speichereinrichtung M dient zur Durchführung einer Getränkezubereitung, wobei hierbei die Aktivierung der Heizeinrichtung 9, der zusätzlichen Heizeinrichtung 9a, wenn vorhanden, der Ventile V1, V2, V3 und V4 sowie der Pumpe 20, der Brühkammer 3 und bedarfsweise weiteren Komponenten, wie einem Mahlwerk 70 durch entsprechende Signalverbindungen 31 erfolgt. Die Ansteuerung der Pumpe 20 erfolgt dabei in einer bevorzugten Ausführung derart, dass verschiedene Förderleistungen eingestellt werden können. Die Steuereinrichtung 18 steht dabei mit einer Eingabevorrichtung 18a zum Empfang von Bedienhandlungen durch den Benutzer und einer Ausgabevorrichtung 18b zum Aktivieren von Ausgabesignalen in Verbindung. Die Ein- und Ausgabevorrichtung ist beispielsweise als Berührbildschirm, besser bekannt als Touchdisplay, ausgebildet.

Gemäß der gezeigten Ausführung umfasst der Getränkebereiter 1 eine weitere Aufnahmevorrichtung 50 für die Aufnahme einer weiteren Trockensubstanz, vorzugsweise Tee. Die Aufnahmevorrichtung 50 umfasst bevorzugt einen ein aus der Vorrichtung herausnehmbaren Siebbehälter 51, in dem die Teeblätter oder Fasern vor der Zubereitung eingegeben werden und nach der Zubereitung bequem aus der Aufnahmevorrichtung 50 herausgenommen und entsorgt werden können. Die Aufnahmevorrichtung 50 stellt damit eine Aufgusskammer 52 für Tee dar. Die Aufnahmevorrichtung 50 ist ferner mit einem Auslauf 53 versehen, der mit einem Ventil V4 geöffnet oder verschlossen werden kann. Dem Auslauf 53 ist die Entnahmevorrichtung 22 zugeordnet. Wenn keine Trockensubstanz in die Aufnahmevorrichtung 50 eingebracht ist, kann dieser Strömungsleitungsweg L4 zur Ausgabe von Heißwasser oder Dampf verwendet werden.

In Fig. 2 ist ferner als bevorzugte Ausführung die zusätzliche Heizeinrichtung 9a in der Leitung L4 gezeigt. Diese dient zur Verstärkung der Heizleistung zum Erhitzen des Wassers zum Aufbrühen von Tee, weil manche Teesorten mit kochendem oder fast kochendem Wasser aufgegossen werden sollen, um das gewünschte Geschmacksergebnis zu erhalten.

Als weitere, vorteilhafte Ausführung umfasst das Strömungsleitungssystem 2 einen weiteren Zweig L5, der zur Ausgabe von Heißwasser unter Umgehung der Aufnahmevorrichtung 50 dient. Mit dem Ventil V3 wird die Ausgabe von Heißwasser zur Entnahmeeinrichtung oder Auslassdüse 23 freigegeben oder gesperrt.

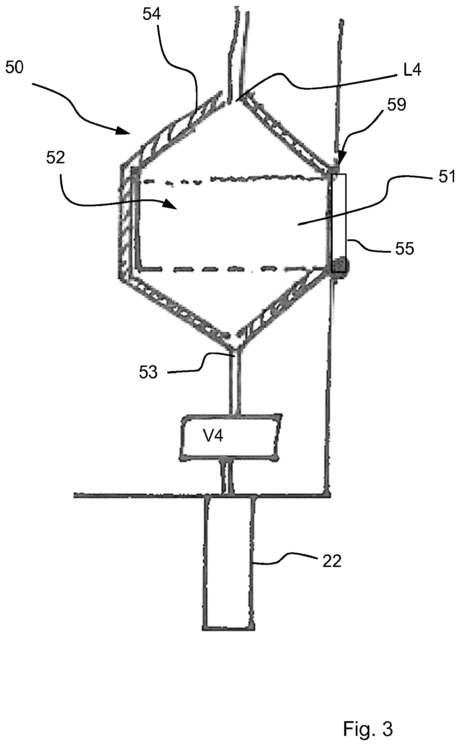

Fig. 3 zeigt die Aufnahmevorrichtung 50 als Einzelteil. Die Zuleitung L4 mündet dabei an der oberen Abdeckung 54 der Aufnahmevorrichtung 50. In den Innenraum 52 ist der Siebbehälter 51 als schubladenartiges Bauteil eingeschoben. Zur Befüllung oder zum Entleeren der Aufnahmevorrichtung 50 kann der Siebbehälter 51 aus dem Innenraum 52 der Aufnahmevorrichtung 50 entfernt werden. Im unteren Bereich der Aufnahmevorrichtung 50 ist der Auslass 53 angeordnet, wobei das dem Auslass 53 zugeordnete oder nachgeschaltete Ventil V4 den Durchfluss im Auslass 53 zur Düse 22 freigibt oder sperrt. Das Ventil V4 wird entsprechend von der Steuereinrichtung 18 gesteuert, um die vorbestimmte Ziehzeit für das aufzubrühende Getränk bereitzustellen.

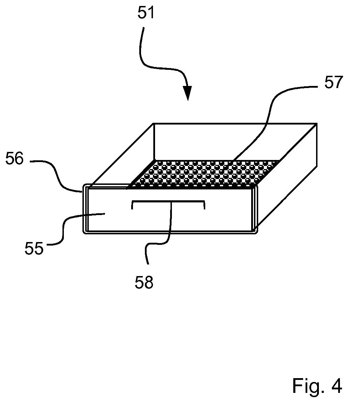

Fig. 4 zeigt den Siebbehälter 51 als Einzelteil. Der Siebbehälter 51 ist dem gezeigten Beispiel als Schublade ausgebildet, in die die Trockensubstanz für eine Getränkeportion eingegeben werden kann. Der Boden 57 ist dabei als Sieb ausgebildet. Die vordere Wand 55 der Schublade 51 bildet den Verschluss für die Aufnahmeöffnung 59 des Aufnahmeschachts. Der Siebbehälter 51 ist ferner mit einer Dichtung 56 versehen, um die Aufnahmeöffnung 59 fluiddicht zu verschließen, wenn der Siebbehälter 51 in den Aufnahmeschacht eingeschoben ist. Damit wird im Inneren der Aufnahmevorrichtung 50 eine Aufgusskammer 52 zur Zubereitung einer Teeessenz geschaffen. In dem hier dargestellten Beispiel ist die Dichtung 56 umlaufend an der Frontwand 55 der Schublade 51 angebracht.

Alle Richtungs- und Positionsangaben beziehen sich auf die betriebsgemäße Aufstell- oder Einbauposition des Getränkebereiters 1.

## Patentansprüche

1. Getränkebereiter (1), wie Kaffeevollautomat, umfassend ein Gehäuse (15) und zumindest ein Strömungsleitungssystem (2), welches mindestens einen Wasser enthaltenden oder befüllbaren Wasserbehälter (14) oder einen Wasseranschluss, wenigstens eine Pumpe (20) zum Fördern des Wassers durch Leitungsabschnitte (L1, L2, L3, L4) und Komponenten des Strömungsleitungssystems (2), mindestens eine Heizeinrichtung (9) zum Erhitzen des Wassers, mindestens eine Ventilanordnung (V3, V4), eine Brühkammer (3) zur Aufnahme einer Trockensubstanz, die dazu konfiguriert ist, mit heißem Wasser unter Druck durchströmt zu werden und wenigstens eine Entnahmeeinrichtung (21) umfasst, und einer Steuereinrichtung (18) zur Steuerung einer im Strömungsleitungssystem (2) eingebundenen Pumpe (20), einer Heizeinrichtung (9) und Ventilen (V1, V2, V3) zur Zubereitung eines ausgewählten Getränkes, umfassend des weiteren eine Aufnahmevorrichtung (50) zur Aufnahme eines Faches (51) zur Bevorratung einer weiteren, aufzubrühenden, pflanzlichen Substanz, wie Tee, welches mit heißem Wasser aufgebrüht werden kann, wobei der Auslass (53) der besagten Aufnahmevorrichtung (50) in eine separate Entnahmeeinrichtung (22) mündet, **gekennzeichnet dadurch, dass** dem Auslass (53) der weiteren Aufnahmevorrichtung (50) ein Ventil (V4) zugeordnet ist, welches mittels der Steuereinrichtung (18) den Auslass (53) zur Entnahmeeinrichtung (22) freigibt oder sperrt.

2. Getränkebereiter nach Anspruch 1,
**dadurch gekennzeichnet,**
**dass** die weitere Aufnahmevorrichtung (50) einen aus dieser herausnehmbaren Siebbehälter (51, 57), wie Teesieb, umfasst.

3. Getränkebereiter nach Anspruch 2,
**dadurch gekennzeichnet,**
**dass** der Siebbehälter (51) als schubladenartiger Einschub ausgebildet ist und die Aufnahmevorrichtung (50) einen Schacht umfasst, der in einer Öffnung (59) in einer Gehäusewand (2) mündet.

4. Getränkebereiter nach Anspruch 3,
**dadurch gekennzeichnet,**
**dass** der Einschub (51) ein Dichtmittel (56) zum dichten Verschließen des Schachts (50) umfasst.

5. Getränkebereiter nach Anspruch 3 oder 4,
**dadurch gekennzeichnet,**
**dass** die Zugangsöffnung (59) zum Schacht in der Frontwand (2) des Getränkebereiters (1) angeordnet ist.

6. Getränkebereiter nach einem der Ansprüche 1 bis 5,
**dadurch gekennzeichnet,**
**dass** die Steuereinrichtung (18) dazu eingerichtet und programmiert ist, das Einlassventil (V2) zu öffnen und wieder zu schließen, um eine erste Teilmenge erhitztes Wasser in die weitere Aufnahmevorrichtung (50) einzulassen, wobei das Auslassventil (V4) während des besagten Einlassens des Wassers geschlossen ist.

7. Getränkebereiter nach Anspruch 6,
**dadurch gekennzeichnet,**
**dass** die Steuereinrichtung (18) dazu eingerichtet und programmiert ist, das Auslassventil (V4) nach einer vorbestimmten Zeit nach Beenden des Einlassens des Wassers zu öffnen, um das aufgebrühte Getränk oder die aufgebrühte Getränkeessenz aus der Entnahmeeinrichtung (22) auszugeben.

8. Getränkebereiter nach Anspruch 7,
**dadurch gekennzeichnet,**
**dass** die Steuereinrichtung (18) ferner dazu eingerichtet und programmiert ist, das Einlassventil (V2) zu öffnen und die Pumpe (20) zu aktivieren, um weiteres Wasser durch die Aufnahmevorrichtung (50) zur Entnahmeeinrichtung (22) zu fördern.

9. Getränkebereiter nach einem der Ansprüche 1 bis 8,
**gekennzeichnet durch**
eine zusätzliche Heizeinrichtung (9a), die in der zuführenden Leitung (L4) zur der Aufnahmevorrichtung (50) zwischengeschaltet oder angeordnet ist.

10. Getränkebereiter nach Anspruch 8 oder 9,
**gekennzeichnet durch**
eine weitere Entnahmeeinrichtung (23), die unter Umgehung der Aufnahmevorrichtung (50) direkt mit dem Wassererhitzer (9, 9a) fluidleitend verbunden ist.

## Claims

1. Beverage maker (1), such as a fully automatic coffee machine, comprising a housing (15) and at least one flow line system (2) which comprises at least one water container (14) that contains or can be filled with water or a water connection, at least one pump (20) for conveying the water through line portions (L1, L2, L3, L4) and components of the flow line system (2), at least one heating device (9) for heating the water, at least one valve arrangement (V3, V4), a brewing chamber (3) for receiving a dry substance that is designed to be passed through by hot water under pressure, and at least one release device (21), also comprising a control device (18) for controlling a pump (20) integrated in the flow line system (2), a heating device (9), and valves (V1, V2, V3) for preparing a selected beverage, said beverage maker further comprising a receiving apparatus (50) for receiving a compartment (51) for storing a further vegetable substance, such as tea, to be brewed, which can be brewed with hot water, the outlet (53) of said receiving apparatus (50) opening into a separate release device (22), **characterised in that** the outlet (53) of the further receiving apparatus (50) is assigned a valve (V4) which, by means of the control device (18), unlocks or locks the outlet (53) with respect to the release device (22).

2. Beverage maker according to claim 1, **characterised in that** the further receiving apparatus (50) comprises a strainer (51, 57), such as a tea strainer, which can be removed therefrom.

3. Beverage maker according to claim 2, **characterised in that** the strainer (51) is designed as a drawer-like insert and the receiving apparatus (50) comprises a shaft which opens into an opening (59) in a housing wall (2).

4. Beverage maker according to claim 3, **characterised in that** the insert (51) comprises a sealing means (56) for sealing the shaft (50).

5. Beverage maker according to either claim 3 or claim 4, **characterised in that** the access opening (59) to the shaft is arranged in the front wall (2) of the beverage maker (1).

6. Beverage maker according to any of claims 1 to 5, **characterised in that** the control device (18) is designed and programmed to open and then close the inlet valve (V2) in order to let a first partial amount of heated water into the further receiving apparatus (50), the outlet valve (V4) being closed during said inlet of water.

7. Beverage maker according to claim 6, **characterised in that** the control device (18) is designed and programmed to open the outlet valve (V4) a predetermined amount of time after the water has been let in, in order to dispense the brewed beverage or the brewed beverage essence from the release device (22).

8. Beverage maker according to claim 7, **characterised in that** the control device (18) is further designed and programmed to open the inlet valve (V2) and activate the pump (20) in order to convey more water through the receiving apparatus (50) to the release device (22).

9. Beverage maker according to any of claims 1 to 8, **characterised by** an additional heating device (9a) which is interposed or arranged in the supply line (L4) to the receiving apparatus (50).

10. Beverage maker according to either claim 8 or claim 9, **characterised by** a further release device (23) which, bypassing the receiving apparatus (50), is directly fluidically connected to the water heater (9, 9a).

## Revendications

1. Distributeur de boissons (1), tel qu'une machine à café entièrement automatisée, comprenant un boîtier (15) et au moins un système de conduite d'écoulement (2), lequel comprend au moins un réservoir d'eau (14) ou un raccord d'eau qui contient de l'eau ou peut être rempli d'eau, au moins une pompe (20) servant à acheminer l'eau à travers des sections de conduite (L1, L2, L3, L4) et des composants du système de conduite d'écoulement (2), au moins un dispositif de chauffage (9) servant à chauffer l'eau, au moins un agencement de soupape (V3, V4), une chambre d'infusion (3) servant à recevoir une substance sèche, laquelle est conçue pour être traversée par de l'eau chaude sous pression, et au moins un dispositif de retrait (21), et un dispositif de commande (18) servant à commander une pompe (20) intégrée dans le système de conduite d'écoulement (2), un dispositif de chauffage (9) et des soupapes (V1, V2, V3) servant à préparer une boisson sélectionnée, comprenant en outre un moyen de réception (50) servant à recevoir un compartiment (51) servant à stocker une autre substance végétale à infuser, telle que du thé, laquelle peut être infusée avec de l'eau chaude, la sortie (53) dudit moyen de réception (50) débouchant dans un dispositif de retrait séparé (22),
**caractérisé en ce**
**qu'**une soupape (V4) est associée à la sortie (53) de l'autre moyen de réception (50), laquelle soupape libère ou bloque la sortie (53) menant au dispositif de retrait (22) au moyen du dispositif de commande (18).

2. Distributeur de boissons selon la revendication 1,
**caractérisé en ce**
**que** l'autre moyen de réception (50) comprend un récipient à filtre (51, 57), tel qu'un filtre à thé, qui peut en être retiré.

3. Distributeur de boissons selon la revendication 2,
**caractérisé en ce**
**que** le récipient à filtre (51) est réalisé comme un insert en forme de tiroir et que le moyen de réception (50) comprend une cavité qui débouche dans une ouverture (59) dans une paroi de boîtier (2).

4. Distributeur de boissons selon la revendication 3,
**caractérisé en ce**
**que** l'insert (51) comprend un organe d'étanchéité (56) destiné à fermer la cavité (50) de façon étanche.

5. Distributeur de boissons selon la revendication 3 ou 4,
**caractérisé en ce**
**que** l'ouverture d'accès (59) est disposée dans la paroi avant (2) du distributeur de boissons (1) par rapport à la cavité.

6. Distributeur de boissons selon l'une des revendications 1 à 5,
**caractérisé en ce**
**que** le dispositif de commande (18) est conçu et programmé pour ouvrir et pour refermer la soupape d'entrée (V2) afin de laisser entrer une première quantité partielle d'eau chauffée dans l'autre moyen de réception (50), la soupape de sortie (V4) étant fermée pendant ladite entrée de l'eau.

7. Distributeur de boissons selon la revendication 6,
**caractérisé en ce**
**que** le dispositif de commande (18) est conçu et programmé pour ouvrir la soupape de sortie (V4) après un temps prédéterminé après la fin de l'entrée de l'eau, afin de distribuer la boisson infusée ou l'essence de boisson infusée provenant du dispositif de retrait (22).

8. Distributeur de boissons selon la revendication 7,
**caractérisé en ce**
**que** le dispositif de commande (18) est en outre conçu et programmé pour ouvrir la soupape d'entrée (V2) et pour activer la pompe (20) afin de transférer davantage d'eau à travers le moyen de réception (50) vers le dispositif de retrait (22).

9. Distributeur de boissons selon l'une des revendications 1 à 8,
**caractérisé par**
un dispositif de chauffage supplémentaire (9a) qui est inséré ou disposé dans la conduite d'alimentation (L4) menant au moyen de réception (50).

10. Distributeur de boissons selon la revendication 8 ou 9,
**caractérisé par**
un autre dispositif de retrait (23) qui, en contournant le moyen de réception (50), est en communication fluidique directement avec le dispositif de chauffage d'eau (9, 9a).
